# EUROPEAN PATENT SPECIFICATION

(11) **EP 4 305 412 B1**
(45) Date of publication and mention of the grant of the patent: **22.07.2026**
(21) Application number: 22711636.5
(22) Date of filing: 11.03.2022
(51) Int. Cl.: G01N 30/32, G01N 30/24, G01N 30/72, G01N 30/20, G01N 30/34

(54) **FLOW MODULE SELECTOR**
DURCHFLUSSMODULSCHALTER
SÉLECTEUR DE MODULE D'ÉCOULEMENT

(30) Priority: 12.03.2021 US 202163160626 P
(43) Date of publication of application: 17.01.2024
(73) Proprietor: DH Technologies Development Pte. Ltd., Singapore 739256 (SG)
(72) Inventor: IYER, Ravi, Concord, Ontario L4K 4V8 (CA); KUCHER, Andrew, Concord, Ontario L4K 4V8 (CA); NEYER, David, Concord, Ontario L4K 4V8 (CA); ROUSHALL, Randy, Concord, Ontario L4K 4V8 (CA); VAN SOEST, Remco, Concord, Ontario L4K 4V8 (CA); YANG, Hao, Concord, Ontario L4K 4V8 (CA)
(74) Representative: Maiwald GmbH
(86) International application number: PCT/IB2022/052224
(87) International publication number: WO 2022/190066

(56) References cited:
- EP-A2- 1 724 576
- WO-A2-01/46687
- WO-A2-2007/109157
- US-A- 4 775 481
- US-A1- 2019 369 062

## Description

### Background

The present teachings are generally directed to methods and systems for delivering analytes to an LC column of a mass spectrometry system.

Liquid chromatography mass spectroscopy (LC/MS) is an analytical technique for determining the elemental composition of test substances with both quantitative and qualitative applications. LC/MS can be useful in identifying unknown compounds, determining the structure of a particular compound by observing its fragmentation, and quantifying the amount of a particular compound in a sample. By way of example, a sample can be introduced into an LC column and be separated into a plurality of components that elute from the LC column in time-separated sequences. The eluants can then be ionized and the generated ions can be analyzed by downstream mass analyzers to obtain structural and compositional information about the substituents of the sample under study.

In many conventional LC/MS systems, the flow rate of a sample introduced into the LC column can be regulated by using calibrated fluid flow modules, which are typically in the form of flow restrictors. More specifically, flow rate measurements can be performed by measuring a pressure differential across a calibrated fluid flow module. Due to limits on the range, accuracy, and precision of pressure measurements, there is a limited range over which a flow module can be used effectively. To address different ranges of flow rates (e.g., from nanoliters/min to microliters/min), different calibrated restrictors are generally used. By way of example, different models of an instrument can incorporate different flow restrictors providing different flow rates. In other cases, user-replaceable cartridges with different flow rates can be provided so as to allow a user to modify the flow rate via replacing one cartridge with another.

Such conventional approaches require hardware changes that can limit the flexibility and flow range of the instruments. Further, adjusting the flow rate by using different cartridges can be time-consuming and can also potentially introduce new sources of failure, e.g., leaks, clogs, etc.

Accordingly, there is a need for systems and methods for facile changes of flow rates of samples introduced into an LC column of an LC/MS system.

US20190369062A1 discloses a system and method for sample introduction within a chromatography system. EP1724576A2 discloses a chromatography system with fluid intake management.

### Summary

The present invention is defined in the appended claims. In one aspect, a system for adjusting flow rate of at least one mobile phase delivered to a liquid chromatography (LC) column is disclosed, which includes a first plurality of pre-calibrated flow modules each configured to receive a first mobile phase at an inlet port thereof and to provide a pre-calibrated range of output flow rates of the first mobile phase at its outlet port, where the first plurality of fluid flow modules is configured to provide different ranges of output flow rates of the first mobile phase. The system further includes a first selector valve in fluid communication with the first plurality of pre-calibrated fluid flow modules for selecting from among the first plurality of pre-calibrated fluid flow modules for selective delivery of the first mobile phase to the LC column, thereby adjusting the flow rate of the first mobile phase delivered to the LC column.

In some embodiments, the system includes a first container for storing the first mobile phase, where the first container is in fluid communication with the first plurality of pre-calibrated flow modules for delivering the first mobile phase thereto.

In some embodiments, the system can further include a first pump for delivering the first mobile phase from the first container to the first plurality of fluid flow modules.

In some embodiments, the system can further include a controller for adjusting a speed of the first pump for tuning the flow rate of the first mobile phase delivered to the first plurality of the fluid flow modules.

In some embodiments, the first selector valve can include a first plurality of inlet ports each of which is in fluid communication with an outlet port of one of the first plurality of fluid flow modules and a first outlet port through which the first mobile phase exits the first elector valve.

In some embodiments, the system can further include a second plurality of pre-calibrated fluid flow modules each configured to receive a second mobile phase at an inlet port thereof and to provide a pre-calibrated range of output flow rates of the second mobile phase at its outlet port, where the second plurality of fluid flow modules are configured to provide different ranges of output flow rates of the second mobile phase.

In some embodiments, the system can include a second container for storing the second mobile phase, where the second container is in fluid communication with the second plurality of pre-calibrated fluid flow modules for delivering the second mobile phase thereto.

In some embodiments, the selector valve is fluidly coupled to the second plurality of pre-calibrated flow modules for selecting from among the second plurality of flow modules for delivery of the second mobile phase to the LC column, thereby adjusting the flow rate of the second mobile phase delivered to the LC column.

In some embodiments, the system can further include a second pump for delivering the second mobile phase to the second plurality of the flow modules. In some embodiments, the controller is configured to adjust a speed of the second pump for tuning the flow rate of the second mobile phase delivered to the LC column. Further, in some embodiments, the second pump is configured to provide a different dynamic range of fluid flow rate than a dynamic range of the fluid flow rate provided by the first pump.

In some embodiments, the controller can be configured to adjust a speed of any of the first and the second pump to change dynamically (i.e., during runtime) the flow rate of any of the first and second mobile phases delivered to the LC column. In some embodiments, such adjustment of the flow rates can be used to change the relative concentrations of the first and the second mobile phases in a mixture of the mobile phases delivered to the LC column.

In some embodiments, the selector valve can include a first plurality of inlet ports, where each inlet port is in fluid communication with an outlet port of one of the first plurality of fluid flow modules and a first outlet port through which the first mobile phase exits the selector valve.

In some embodiments, the selector valve further includes a second plurality of inlet ports each of which is in fluid communication with an outlet port of one of the second plurality of flow modules to receive the second mobile phase and further includes a second outlet port through which the second mobile phase exits the selector valve.

In some embodiments, the system can further include a mixing element having a first inlet port for receiving the first mobile phase from the first selector valve and a second inlet port for receiving the second mobile phase from the second selector valve to generate a mixed mobile phase, where the mixing element includes an outlet port for delivering the mixed mobile phase to the LC column.

In some embodiments, the system can include a first pressure sensor that is disposed between the first pump and the first plurality of fluid flow modules for measuring the fluid pressure delivered to the first plurality of fluid flow modules. In some embodiments, the system can further include a second pressure sensor disposed between the second pump and the second plurality of fluid flow modules for measuring the fluid pressure delivered to the second plurality of fluid flow modules. Further, in some embodiments, the system can include a third pressure sensor that is disposed between the outlet ports of any of the first and the second plurality of fluid flow modules and the mixing element for measuring the pressure of fluid delivered from any of the first and the second plurality of fluid flow modules to the mixing element. In some such embodiments, the second pump is configured to provide a dynamic range of fluid flow that is different from a dynamic range of fluid flow provided by the first pump.

In a related aspect, a system for adjusting flow rate of at least one mobile phase delivered to a liquid chromatography (LC) column is disclosed, which includes a first plurality of pre-calibrated flow modules each of which is configured to receive a first mobile phase at an inlet port thereof and to provide a pre-calibrated range of output flow rates of the first mobile phase at its outlet port. The first plurality of fluid flow modules are configured to provide different ranges of output flow rates of the first mobile phase. A first selector valve is in fluid communication with the first plurality of pre-calibrated flow modules for selecting from among the first plurality of pre-calibrated fluid flow modules for selective delivery of the first mobile phase to the LC column, thereby adjusting the flow rate of the first mobile phase delivered to the LC column. The system can further include a first container for storing the first mobile phase, where the first container is in fluid communication with the first selector valve to deliver the first mobile phase thereto. In some such embodiments, the first selector valve can include a first inlet port for receiving the first mobile phase and a first plurality of outlet ports each of which is fluidly coupled to one of the first plurality of the flow modules. Further, the system can include a second plurality of pre-calibrated flow modules, where each flow modules is configured to receive a second mobile phase at an inlet port thereof and to provide a pre-calibrated range of output flow rates of the second mobile phase at its outlet port. The second plurality of fluid flow modules are configured to provide different output flow rates of the second mobile phase.

In some embodiments, the system can include a second container for storing a second mobile phase. In some such embodiments, the first selector valve can include a second inlet port for receiving the second mobile phase from the second container and a second plurality of outlet ports each of which is fluidly coupled to one of said second plurality of flow modules for selective delivery of the second fluid flow modules. The system can further include a mixing element having a first inlet port configured to receive the first mobile phase from any of the first plurality of fluid flow modules when that flow module is selected via said selector valve. The mixing element can further include a second inlet port configured to receive the second mobile phase from any of the second plurality of flow modules when that flow module is selected via said selector valve. The mixing element is configured to mix the first and second mobile phases and to generate a mixed mobile phase. The mixing element can have an outlet port in communication with the LC column to deliver the mixed mobile phase to the LC column.

In some embodiments, a first pressure sensor is disposed between the first pump and the selector valve for measuring pressure of the first mobile phase delivered to said selector valve. In some such embodiments, a second pressure sensor is disposed between the second pump and the selector valve for measuring pressure of the second mobile phase delivered to the selector valve. Further, in some embodiments, a third pressure sensor is disposed between the outlet ports of any of the first and the second plurality of fluid flow modules and the mixing element for measuring pressure of the fluid delivered from any of the first and said second plurality of flow modules to the mixing element.

In some such embodiments, the first and the second pumps are configured to provide different dynamic ranges of fluid flow. In some embodiments, the system can include a second container for storing the second mobile phase. A second plurality of pre-calibrated fluid flow modules are configured to receive the second mobile phase from the second container, where each of the second plurality of pre-calibrated flow modules provides a pre-calibrated range of output flow rates of the second mobile phase.

In some embodiments of the above system, a second selector valve is in fluid communication with the second plurality of pre-calibrated flow modules for selecting from among the second plurality of pre-calibrated flow modules for selective delivery of the second mobile phase to the LC column, thereby adjusting the flow rate of the second mobile phase delivered to said LC column.

In some embodiments, each of the first plurality of fluid flow modules includes an inlet port for receiving the first mobile phase from the first container and an outlet port in fluid communication with the first selector valve. Each of the second plurality of fluid flow modules includes an inlet port for receiving the second mobile phase from the second container and an outlet port in fluid communication with the second selector valve. A mixing element having a first inlet port can be in fluid communication with the outlet port of said first selector valve to receive the first mobile phase and a second inlet port in fluid communication with the outlet port of the second selector valve to receive the second mobile phase, where the mixing element is configured to mix the first and second mobile phases to generate a mixed mobile phase. The mixing element can have an outlet port for delivering the mixed mobile phase to the LC column. A first pump can be employed to deliver the first mobile phase from the first container to the first plurality of flow modules. A second pump can be employed to deliver the second mobile phase from the second container to the second plurality of flow modules. In some such embodiments, the first and the second pumps can be configured to provide different dynamic ranges of the fluid flow rates.

In a related aspect, a system for adjusting the flow rate of at least one mobile phase delivered to a liquid chromatography (LC) column is disclosed, which includes a container for storing a first mobile phase, a first plurality of pre-calibrated flow modules each configured to receive the first mobile phase from the container at an inlet port thereof and to provide a pre-calibrated range of output flow rates of the first mobile phase at its outlet port, where the first plurality of fluid flow modules is configured to provide different ranges of output flow rates of the first mobile phase. A first selector valve can be in fluid communication with at least a portion of the first plurality of pre-calibrated flow modules for selecting from among those modules for selective delivery of the first mobile phase to the LC column, thereby adjusting the flow rate of the first mobile phase delivered to said LC column. At least one of the first plurality of pre-calibrated fluid flow modules is configured to provide a continuous flow of said first phase from said first container to said LC column.

In some embodiments, the system can include a second container for storing a second mobile phase. The system can further include a second plurality of pre-calibrated fluid flow modules each configured to receive the second mobile phase from the second container at an inlet port thereof and to provide a pre-calibrated range of output flow rates of the second mobile phase at its outlet port, where the second plurality of fluid flow modules is configured to provide different ranges of output flow rates of the second mobile phase. A second selector valve can be in fluid communication with at least a portion of the second plurality of pre-calibrated flow modules to select from among those flow modules for selective delivery of the second mobile phase to the LC column, thereby adjusting the flow rate of the second mobile phase delivered to the LC column. In some such embodiments, at least one of the second plurality of fluid flow modules is configured to provide a continuous flow of the second mobile phase from the second container to the LC column.

In some embodiments, the system further includes a mixing element having a first inlet port for receiving the continuous flow of the first mobile phase provided by one of the first plurality of flow modules as well as an output flow associated with another one of the plurality of first fluid flow modules selected by the first selector valve. The mixing element can have a second inlet port for receiving the continuous flow of the second mobile phase provided by the flow module of the second plurality of flow modules providing a continuous flow of the second mobile phase as well as an output flow of another one of said plurality of second flow modules selected by said second selector valve. The mixing element is configured to generate a mixed mobile phase by mixing the first and second mobile phases received at its first and second inlet ports and deliver said mixed mobile phase to the LC column.

### Brief Description of the Drawings

FIG. **1** schematically depicts a system according to an embodiment of the present teachings for delivering two mobile phases to a mixing element, which can in turn deliver a mixture of the mobile phases to an LC column of a mass spectrometry system,
FIG. **2** schematically depicts a system according to another embodiment of the present teachings for delivering two mobile phases to a mixing element, which can in turn deliver a mixture of the mobile phases to an LC column of a mass spectrometry system,
FIG. **3** schematically depicts a system according to another embodiment of the present teachings for delivering two mobile phases to a mixing element, which can in turn deliver a mixture of the mobile phases to an LC column of a mass spectrometry system,
FIG. **4** schematically depicts a system according to another embodiment of the present teachings for delivering two mobile phases to a mixing element, which can in turn deliver a mixture of the mobile phases to an LC column of a mass spectrometry system,
FIG. **5A** schematically depicts an example of an implementation of a selector valve according to an embodiment, which can operate under control of a controller with input received from a GUI,
FIG. **5B** schematically an example of an implementation of the controller depicted in FIG. **5A****,**
FIG. **6** schematically depicts an LC column and trap disposed upstream of the LC column, where different flow rates can be used for loading the trap and introducing a sample onto the LC column, and
FIG. **7** schematically depicts an LC/MS system in which a delivery system according to an embodiment of the present teachings for delivering one or more mobile phases to the LC column is incorporated.

### Detailed Description

The present disclosure relates generally to systems and methods for delivering one or more mobile phases to an LC column of an LC/MS system by employing an automated valve to select from among multiple pre-calibrated flow modules. As discussed below, the systems and methods according to the present teachings can provide a wide range of flow rates without any hardware changes. A variety of different embodiments incorporating the present teachings are discussed below for providing specific, targeted flow ranges, a large overall flow range, with higher precision. The embodiments discussed below also provide more flexibility for generating a variety of mobile phase compositions, e.g., by mixing different mobile phases in a variety of different concentration ratios. Although the following embodiments are described in connection with delivering two mobile phases to a mixing element, which can in turn generate a mixed mobile phase for delivery to an LC column, the present teachings can in fact be employed to deliver only one mobile phase or more than two mobile phases (e.g., 3, 4, 5, or more mobile phases) to an LC column, e.g., via a mixing element.

Various terms are used herein in accordance with their ordinary meanings in the art. The term "about" as used herein denotes a variation of at most 10% around a numerical value. The term "substantially" as used herein denotes a deviation, if any, of at most 10% relative to a complete condition and/or state.

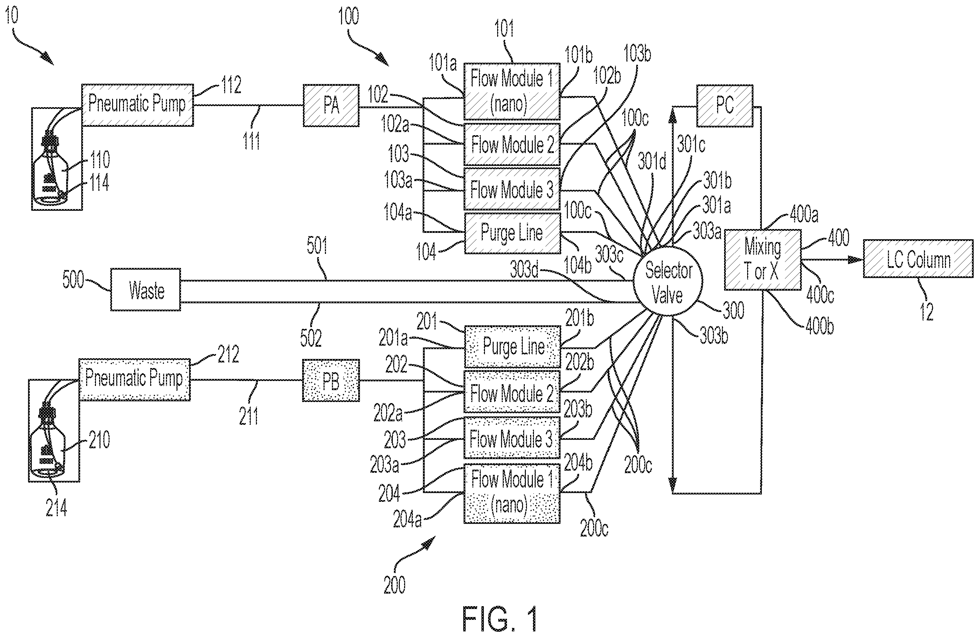

FIG. **1** schematically depicts a system **10** for delivering two mobile phases (e.g., liquid solutions containing one or more analytes of interest), individually or in combination, to a liquid chromatography (LC) column **12** and allowing adjustment of the flow rates of these mobile phases via the use of multiple flow modules that provide different ranges of flow rates for the mobile phases and at least one selector valve that allows selecting from among those fluid flow modules for adjusting the flow rates of the mobile phases delivered to the LC columns, as discussed in more detail below.

More specifically, in this embodiment, the system **10** includes two sets of fluid flow modules **100** and **200,** where the fluid flow modules **100** are fluidly coupled to a container **110** via a pneumatic pump **112** and the fluid flow modules **200** are fluidly coupled to a container **210** via a pneumatic pump **212.** In this embodiment, the container **110** stores a first mobile phase **114** and the container **210** stores a second mobile phase **214.**

With continued reference to FIG. **1****,** in this embodiment, the set of fluid flow modules **100** includes three fluid flow modules **101, 102, 103** (herein also referred to as the "first plurality of fluid flow modules"), each of which is configured to provide a pre-calibrated range of flow rates, and a purge module **104** that can allow purging the content of the container **110,** as discussed in more detail below.

While in some embodiments the pre-calibrated ranges of flow rates associated with these fluid flow modules are distinct, in other embodiments the fluid flow rates associated with at least two of the fluid flow modules can be partially overlapping.

The fluid flow modules **101, 102, 103,** and the purge module **104** include inlet ports **101a, 102a, 103a,** and **104a,** respectively, for receiving the first mobile phase from the container **110** via a fluid line **111.** Further, the fluid flow modules **101, 102, 103,** and the purge module **104** include outlet ports **101b, 102b, 103b,** and **104b,** respectively, through which the first mobile phase exits these modules. A pressure sensor **PA** is positioned between the pneumatic pump **112** and the plurality of fluid flow modules **100** to measure the pressure of the first mobile phase as it is delivered by the pneumatic pump **112** to the fluid modules **100.**

The purge module **201** and the fluid flow modules **202, 203,** and **204** (herein also referred to as "the second plurality of fluid flow modules") include inlet ports **201a, 202a, 203a, 204a,** respectively, for receiving the second mobile phase **214** from the container **210,** and outlet ports **201b, 202b, 203b, 204b,** respectively, through which the second mobile phase can exit the fluid flow modules **200.** A pressure sensor **PB** is positioned between the pneumatic pump **212** and the plurality of fluid modules **200** to measure the pressure of the second mobile phase as it is delivered by the pneumatic pump **212** to the fluid modules **200.**

By way of example, in this embodiment, each of the fluid flow modules **100** and **200** can be implemented as a flow restrictor. Such flow restrictors are commercially available.

The system **10** further includes a selector valve **300** having a first plurality of inlet ports **301a, 301b, 301c,** and **301d,** which can receive the first mobile phase from the outlet ports **101b, 102b, 103b,** and **104b** of the fluid modules **100** via a plurality of fluid lines **100c,** and a second plurality of inlet ports **302a, 302b, 302c, 302d,** which can receive the second mobile phase from the outlet ports **201b, 202b, 203b,** and **204b** of the fluid modules **200** via a plurality of fluid lines **200c.**

The selector valve **300** further includes two outlet ports **303a** and **303b.** The outlet ports **303a** and **303b** are coupled, respectively, to inlet ports **400a** and **400b** of a mixing element **400.** The outlet port **303a** of the selector valve **300** allows the output fluid flow of any of the fluid flow modules **101/102/103** that is selected by the selector valve **300** to reach the mixing element **400** and the outlet port **303b** of the selector valve **300** allows the output fluid flow of any of the fluid flow modules **202/203/204** that is selected by the selector valve **300** to reach the mixing element **400.**

In this embodiment, a pressure sensor **PC** is disposed between the outlet port **303a** of the selector valve **300** and the mixing element **400** for measuring the pressure of the first mobile phase flowing from the selector valve's outlet **303a** to the mixing element **400.** Though not shown in this embodiment, in other embodiments, a pressure sensor can also be disposed between the outlet port **303b** of the selector valve and the mixing element **400.**

With continued reference to FIG. **1****,** the selector valve **300** further includes two outlet ports **303c** and **303d** that allow the flow of the first and the second mobile phases received by the selector valve to a waste container **500** via fluid lines **501** and **502,** respectively. By way of example, the content of each of the containers **112** and **212** can be purged via the purge modules **104** and **201** and the selector valve **300.**

The mixing element mixes the received first and second mobile phases to generate a mixed mobile phase, which can be delivered to the LC column **12** via an outlet port **400c** of the mixing element **400.**

The fluid flow modules **100** and **200** can provide a wide range of flow rates. In some embodiments, the range of flow rates provided by the fluid flow modules **100** and **200** are configured so as to allow obtaining a mixed mobile phase with different relative concentrations of the first and the second mobile phases. In some embodiments, a range of flow rates provided by the fluid flow modules **101/102/103** are significantly different from the range of flow rates provided by the fluid flow modules **202/203/204.** Further, as noted above, in this embodiment, within each set of the fluid flow modules **100/200,** the fluid flow modules can provide different flow rates of the mobile phase, where in some cases the different ranges of flow rates provided by at least two of the fluid flow modules within the first and second sets of fluid flow modules can be at least partially overlapping.

A system according to the present teachings for delivering one or more mobile phases to an LC column allows adjusting the concentration ratios of two or more mobile phases in a mixture of those mobile phases without a need for any hardware change, and even during run-time.

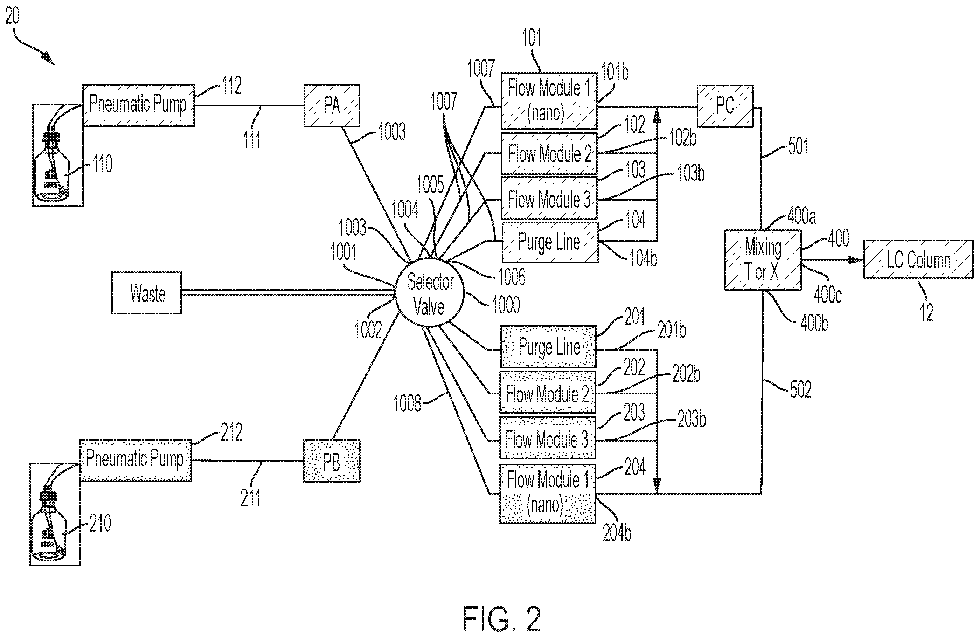

FIG. **2** schematically depicts a system **20** according to another embodiment of the present teachings for delivering two mobile phases (e.g., liquid solutions containing one or more analytes of interest), individually or in combination, to the liquid chromatography (LC) column **12.** In contrast with the previous embodiments in which the selector valve was positioned between the two sets of fluid flow modules and the mixing element, in this embodiment, the two sets of the fluid flow modules are positioned between the selector valve and the mixing element.

More specifically, in this embodiment, the system **20** includes a selector valve **1000** having two inlet ports **1001** and **1002,** where the inlet port **1001** receives a first mobile phase from the first container **110** via the fluid line **111** and the second inlet port **1002** receives a second mobile phase from the second container **210** via the fluid line **211.** Similar to the previous embodiment, the pneumatic pumps **112** and **212** facilitate the flow of the mobile phases from the containers **110** and **210** to the respective inlet ports of the selector valve **1000.**

With continued reference to FIG. **2****,** the selector valve **1000** further includes four outlet ports **1003, 1004, 1005,** and **1006,** that are fluidly connected via a plurality of fluid lines **1007** to the fluid flow modules **101, 102, 103,** and the purge module **104** via their inlet ports thereof (not numbered in this figure for brevity). The selector valve **1000** also includes four additional outlet ports **1008, 1009, 1010,** and **1011** that are fluidly connected via a plurality of fluid lines **1012** to the purge module **201,** and the plurality of fluid flow modules **202, 203,** and **204** via the inlet ports of these modules (not numbered in this figure for brevity).

Similar to the previous embodiments, the flow modules **101/102/103/104** include outlet ports **101b, 102b, 103b,** and **104b** that fluidly connect the outlet ports of these fluid flow modules via a fluid line **501** to the inlet port **400a** of the mixing element **400.** Further, the purge module **201** and the plurality of fluid flow modules **202, 203,** and **204** include a plurality of outlet ports **201b, 202b, 203b,** and **204b** that fluidly connect these fluid modules, via a fluid line **502,** to the other inlet port **400b** of the mixing element **400.**

The selector valve **1000** can be employed to selectively pressurize any of the purge and fluid flow modules **100** or **200,** individually or any desired combinations thereof, for selective delivery of the mobile phases to the mixing element **400.** As discussed above, the mixing element **400** mixes the received mobile phases to generate a mixed mobile phase, which can be delivered to the LC column via the output port **400c** of the mixing element.

In some embodiments, at least one of the fluid flow modules can provide a direct connection between a container storing a mobile phase and the mixing element. Such an arrangement allows maintaining a continuous flow of at least one mobile phase to the LC column while using one or more selector valves to augment the continuous flow with one or more mobile phases (e.g., the same as or different from the continuously flowing mobile phase).

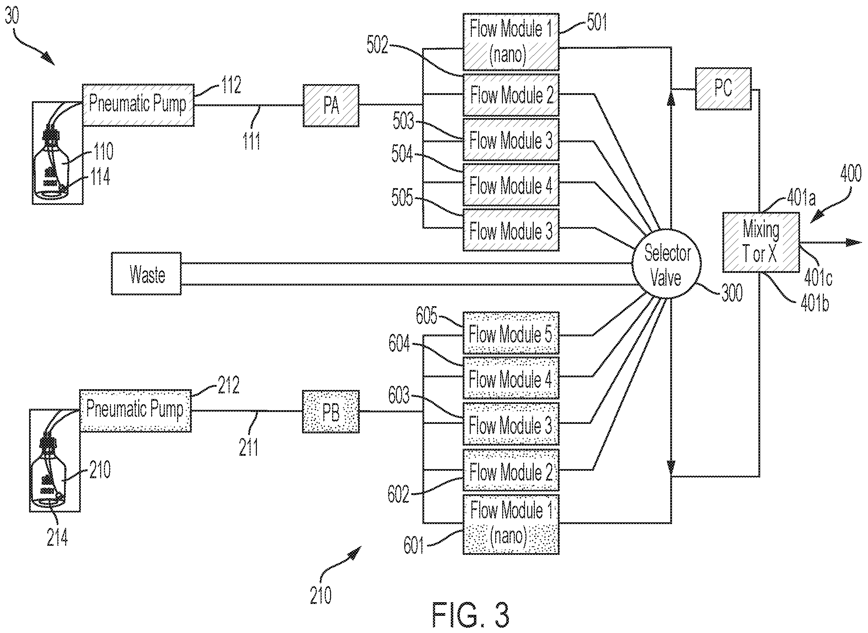

By way of example, FIG. **3** schematically depicts an embodiment of such a system **30,** which is similar to the system **10** discussed above except that in this embodiment two of the fluid flow modules directly connect each of the containers **110** and **210** to the mixing element **400** to deliver a continuous flow of the first and the second mobile phases **(114/214)** to the mixing element **400.**

More specifically, in this embodiment, the system **30** includes a first plurality of fluid flow modules **500,** which includes fluid flow modules **501, 502, 503, 504,** and **505** and a second plurality of fluid flow modules **600,** which include fluid flow modules **601, 602, 603, 604,** and **605.**

The fluid flow modules **500** receive the first mobile phase **114** from the container **110** via the fluid line **111** through their inlet ports **501a, 502a, 503a, 504a,** and **505a** and the fluid flow modules **600** receive the second mobile phase **214** from the container **210** via the fluid line **211** through their inlet ports **601a, 602a, 603a, 604a,** and **604a.** Two pressure sensor **PA** and **PB** allow measuring the pressure of the first and the second mobile phases delivered to the first and the second fluid flow modules **500/600.**

In this embodiment, the fluid flow module **501** provides direct fluid coupling between the container **111** and the mixing element **400** to provide a continuous flow of the first mobile phase to the mixing element. Further, the fluid flow module **601** provides direct fluid coupling between the container **211** and the mixing element **400** to provide a continuous flow of the second mobile phase to the mixing element. More specifically, an outlet port **501b** of the fluid flow module **501** is directly connected to the inlet port **401** of the mixing element **400** and the outlet port **601b** of the fluid flow module **601** is directly connected to the input port **402** of the mixing element **400.** This allows providing a continuous flow of the first and the second mobile phases to the mixing element, where the flow rate of the first mobile phase introduced into the mixing element is determined by the flow rate provided by the fluid flow module **501** and the flow rate of the of the second mobile phase introduced into the mixing element is determined by the flow rate provided by the fluid flow module **601.**

The outlet ports **502b, 503b, 504b,** and **505b** of the fluid flow modules **502, 503, 504,** and **505** are fluidly connected to a first plurality of inlet ports **1, 2, 3,** and **4** of the fluid selector valve **2000** and the outlet ports **602b, 603b, 604b,** and **605b** of the fluid modules **602, 603, 604,** and **605** are fluidly connected to a second plurality of inlet ports **5, 6, 7,** and **8** of the fluid selector valve **2000.** An output port **9** of the selector valve **2000** is fluidly connected to the first input port **401a** of the mixing element **400** and an output port **10** of the selector valve **2000** is fluidly connected to the second inlet port **401b** of the mixing element.

The selector valve can be employed to select from among the fluid flow module **502b, 503b, 504b,** and **505b** and the fluid flow modules **602b, 603b, 604b,** and **605b,** individually or in different combinations (e.g., one fluid flow module from the fluid flow modules **500** and one fluid flow module from the fluid flow modules **600).** This allows augmenting the fluid flow provided by the fluid modules **501** and **601,** which provide a continuous flow of the first and the second mobile phases. The system provides a great degree of flexibility in adjusting the flow of the first and the second mobile phases to the mixing element and the LC column. For example, the system allows providing only a continuous flow of the first or the second mobile phase to the mixing element, and hence the LC column by activating only the fluid flow module **501** or **601.** Alternatively, a continuous flow of both the first and the second mobile phases to the mixing element and hence the LC column can be provided via concurrent activation of both of the fluid flow modules **501** and **601.** Further, as noted above, the fluid flow provided by any of the continuous fluid flow module **501** or **601** can be augmented by using the selector valve to activate any one of the other fluid modules of the first and second plurality of fluid flow module **500/600.**

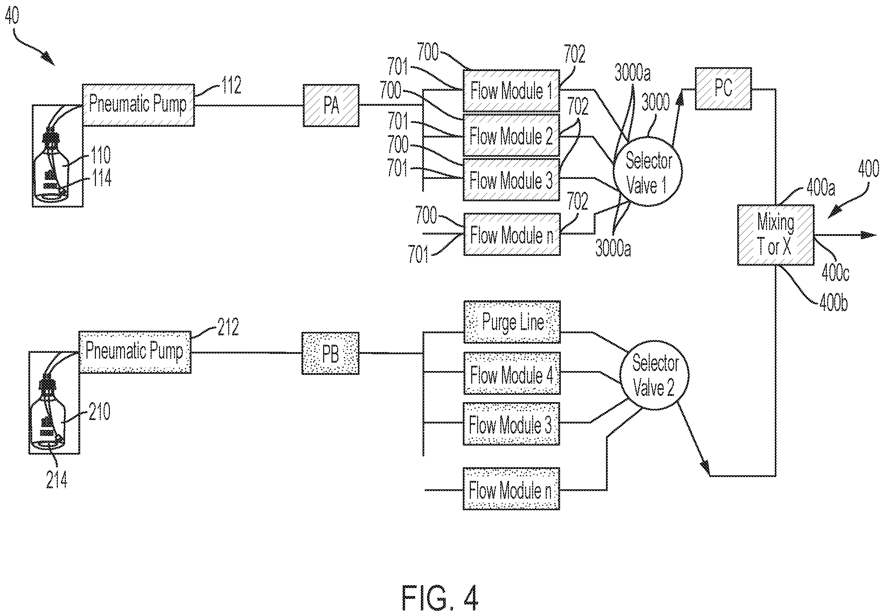

Although in the above embodiments only a single selector valve is employed, in other embodiments a plurality of selector valves can be utilized to select from among fluid flow modules of different banks of fluid flow modules. By way of example, FIG. **4** schematically depicts an embodiment of such a system **40** that includes a first plurality of fluid flow modules **700** and a second plurality of fluid flow modules **800,** where the fluid flow modules **700** receive the first mobile phase **114** from the first container **110** via a plurality of inlet ports **701** through a fluid line **111** and the fluid flow modules **800** receive the second mobile phase **214** from the second container **210** via a plurality of inlet ports **801** through a fluid line **211.**

In this embodiment, the fluid flow modules **700** include a plurality of outlet ports **702** that are fluidly connected to a plurality of inlet ports **3000a** of a selector valve **3000.** The selector valve **3000** includes an outlet port **3000b** that is in fluid communication with the inlet port **401a** of the mixing element **400.** The selector valve **3000** can be employed to select from among the plurality of the fluid flow modules **700** to fluidly connect the selected fluid flow module to the mixing element, thereby adjusting the flow rate of the first mobile phase introduced into the mixing element.

With continued reference to FIG. **4****,** the fluid flow modules **800** include a plurality of outlet ports **802** that are fluidly connected to a plurality of inlet ports **4000a** of another selector valve **4000.** The selector valve **4000** includes an outlet port **4000b** that is fluidly connected to another inlet port **401b** of the mixing element **400.**

The selector valve **4000** can be employed to select from among the plurality of the fluid flow modules **800** to fluidly connect the selected fluid flow module to the mixing element, thereby adjusting the flow rate of the second mobile phase introduced into the mixing element.

The mixing element can in turn mix the first and the second mobile phases to generate a mixed mobile phase, which can be delivered to the LC column **12** via the output port **401c** of the mixing element **400.** The selector valves allow adjusting the flow rates of the first and the second mobile phases delivered to the mixing element, thereby adjusting the concentration ratios of the first and the second mobile phases in the mixed mobile phase that is delivered to the LC column.

Similar to the previous embodiments, the pressure sensor **PA** measures the pressure of the first mobile phase delivered to the fluid flow modules **700** and the pressure sensor **PB** measures the pressure of the second mobile phase delivered to the fluid flow modules **800.** Further, the pressure sensor **PC** measures the pressure of the first mobile phase delivered via the selector valve **3000** to the mixing element **400.** Though not shown in this embodiment, a pressure sensor can also be employed to measure the pressure of the second mobile phase delivered to the mixing element.

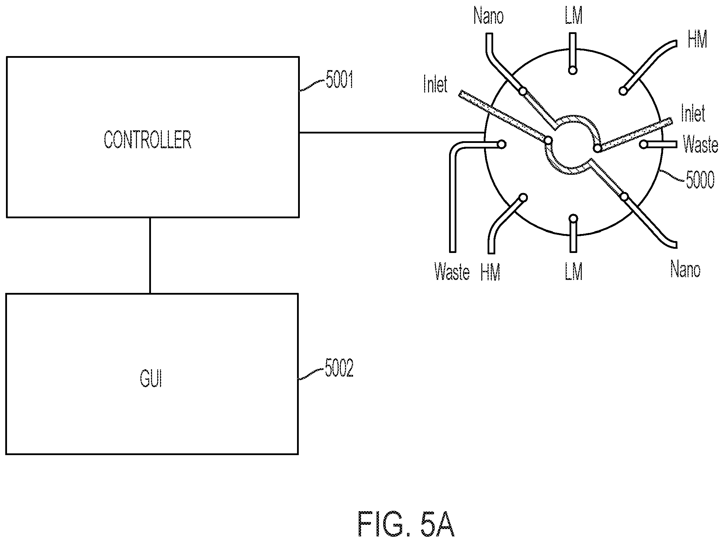

A system according to the present teachings for delivering one or more mobile phases to an LC column of a mass spectrometry system can provide a number of advantages. For example, such a system can allow the introduction of one or more mobile phases to an LC column over a range of flow rates without a need for hardware changes. By way of example, FIG. **5A** schematically depicts an example of a selector valve **5000** for use in various embodiments of the present teachings, which can provide flow rates in the nanoliters/min regime, low microliters/min regime, and high microliters/min regime. In this example, the selector valve **5000** can also provide access to a waste container, e.g., in a manner discussed above.

With continued reference to FIG. **5A****,** a controller **5001** is employed to control the setting of the selector valve **5000** to various modes of operation corresponding to different flow rates. Further, a graphical user interface (GUI) **5002** is provided to allow a user to communicate with the controller **5001** to set the desired mode of operation of the selector valve. Similar controllers and GUIs can be employed in the above embodiments for controlling the operation of the selector valves.

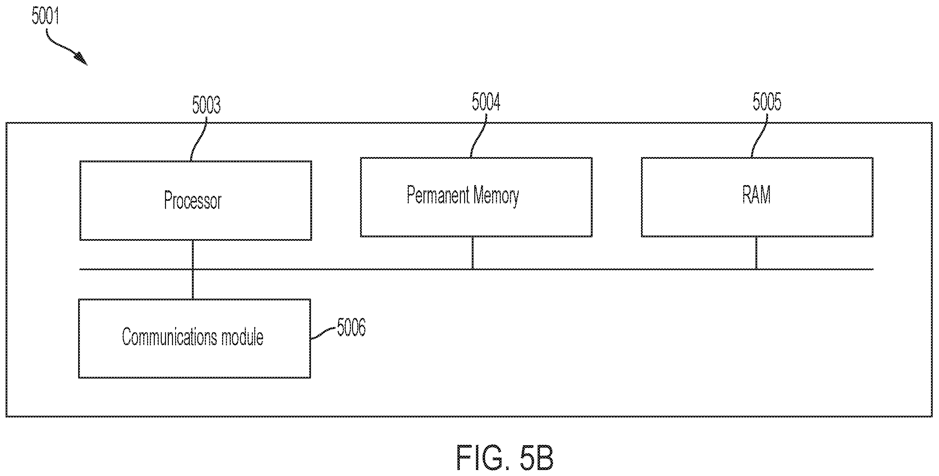

The controller and the GUI can be implemented using techniques known in the art as informed by the present teachings. By way of example, FIG. **5B** schematically depicts an example of implementation of the controller **5001.** In this embodiment, the controller **5001** includes, among other elements known in the art, a processor **5003,** a permanent memory **5004,** a random access memory (RAM) **5005,** and a communication module **5006,** and a communications bus **5007** that allows the processor to communicate with various components of the controller. The communications module **5006** can provide wired or wireless communication, e.g., Bluetooth^{®}, WiFi^{®}, or other suitable protocols, to the GUI **5002** for receiving instructions from a user. The instructions for operating the selector valve can be stored in the permanent memory **5004** and can be loaded onto RAM **5005** during runtime for execution.

In some embodiments, the selector valve can be operated based on a predefined schedule to adjust the flow rates of the mobile phases delivered to the LC column.

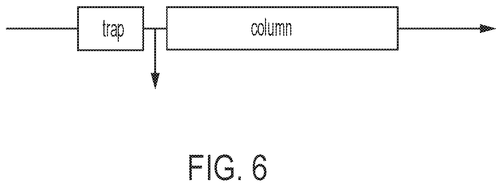

As noted above, a system according to the present teachings can be employed for selecting different workflows with respect to the delivery of one or more mobile phases to an LC column of a mass spectrometry system (e.g., direct injection, trap/elute, nanoliters/min or microliters/min delivery rates). By way of example, FIG. **6** schematically depicts one example of an application of a system according to an embodiment of the present teachings for delivering one or more mobile phases to an LC column. In this embodiment, one or more mobile phases (e.g., a mixture of mobile phases) are first introduced onto a trap column and then onto an LC column. A system according to the present teachings can be employed to load the mobile phase(s) onto the trap column at a higher flow rate and then switch to a lower flow rate for chromatography.

A system according to the present teachings for delivering one or more mobile phases to an LC column of a mass spectrometry system can be incorporated into a variety of mass spectrometry systems. By way of example, such systems can include mass spectrometers using a variety of mass analyzers, such as, one or more quadrupole mass analyzers, a time-of-flight mass analyzer and combinations thereof.

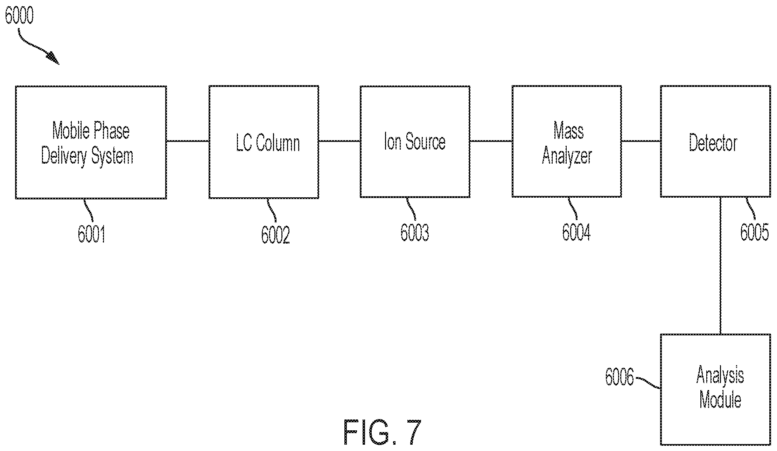

FIG. **7** schematically illustrates an example of a mass spectrometry system **6000** in which a system according to the present teachings for the delivery of one or more mobile phases is incorporated. More specifically, the illustrated system **6000** includes a mobile-phase delivery system **6001** according to an embodiment of the present teachings, such as the above delivery systems. The output of the mobile delivery system is introduced into a liquid chromatography (LC) column **6002** and the eluent(s) from the LC column are introduced into an ion source **6003** to ionize one or more analytes present in the sample received from the LC column. The ions are then transferred to one or mass analyzers **6004** of the mass spectrometer. An ion detector **6005** disposed downstream of the mass analyzer(s) **6004** can detect ions passing through the mass analyzer and generate detection signals in response to the detection of the ions. An analysis module **6006** can receive the detection signals generated by the ion detector **6005** and analyze those signals to generate a mass spectrum of the generated ions.

A variety of different types of mass analyzers can be employed in the mass spectrometry system **6000.** By way of example, the mass analyzer can be a quadrupole or a time of flight mass analyzer. For example, in some embodiments, multiple tandem quadrupole mass analyzers can be employed to perform MS/MS mass analysis. In some such embodiments, one or more quadrupole mass analyzers can be employed to select parent ions having m/z ratios within a desired range. Further, in some such embodiments, the selected parent ions can undergo collision-induced fragmentation in a collision cell and the fragment ions can be mass analyzed by additional quadrupole mass analyzers disposed downstream of the collision cell.

Those having ordinary skill in the art will appreciate that various changes can be made to the above embodiments without departing from the scope of the invention, which is defined in the appended claims.

## Claims

1. A system for adjusting flow rate of at least one mobile phase delivered to a liquid chromatography (LC) column (12), comprising:
a first plurality of pre-calibrated flow modules (101, 102, 103) each configured to receive a first mobile phase at an inlet port (101a, 102a, 103a) thereof and to provide a pre-calibrated range of output flow rates of said first mobile phase at its outlet port (101b, 102b, 103b), wherein said first plurality of flow modules (101, 102, 103) are configured to provide different ranges of output flow rates of said first mobile phase, and
a first selector valve (300) in fluid communication with said first plurality of pre-calibrated flow modules (101, 102, 103) for selecting from among said first plurality of pre-calibrated flow modules (101, 102, 103) for selective delivery of said first mobile phase to said LC column (12), thereby adjusting the flow rate of the first mobile phase delivered to said LC column (12).

2. The system of Claim 1, further comprising a first container (110) for storing said first mobile phase, said first container (110) being in fluid communication with said first plurality of pre-calibrated flow modules (101, 102, 103) for delivering said first mobile phase thereto.

3. The system of Claim 2, further comprising a first pump (112) for delivering said first mobile phase from said first container (110) to said first plurality of flow modules (101, 102, 103),
optionally further comprising a first pressure sensor disposed between said first pump (112) and said first plurality of fluid flow modules (101, 102, 103) for measuring fluid pressure delivered to said first plurality of fluid flow modules (101, 102, 103), and
optionally further comprising a controller (5001) for adjusting a speed of said first pump (112) for tuning the flow rate of said first mobile phase delivered to said first plurality of the flow modules (101, 102, 103).

4. The system of any one of the preceding claims, wherein said first selector valve (300) comprises a first plurality of inlet ports (301a, 301b, 301c) each of which is in fluid communication with an outlet port (101b, 102b, 103b) of one of said first plurality of flow modules (101, 102, 103) and a first outlet port (303a) through which the first mobile phase exits the first selector valve (300).

5. The system of Claim 2, further comprising a second plurality of pre-calibrated flow modules (201, 202, 203) each configured to receive a second mobile phase at an inlet port (201a, 201b, 201c) thereof and to provide a pre-calibrated range of output flow rates of said second mobile phase at its outlet port (202a, 202b, 202c), wherein said second plurality of flow modules (201, 202, 203) are configured to provide different ranges of output flow rates of said second mobile phase relative to the flow rates provided by said first plurality of flow modules (101, 102, 103) for the first mobile phase.

6. The system of Claim 5, further comprising a second container (210) for storing said second mobile phase, said second container (210) being in fluid communication with said second plurality of pre-calibrated flow modules (201, 202, 203) for delivering said second mobile phase thereto.

7. The system of Claim 6, wherein said first selector valve (300) is fluidly coupled to said second plurality of pre-calibrated flow modules (201, 202, 203) for selecting from among said second plurality of flow modules (201, 202, 203) for delivery of the second mobile phase to said LC column (12), thereby adjusting the flow rate of the second mobile phase delivered to said LC column (12).

8. The system of Claim 6, further comprising a second pump (212) for delivering said second mobile phase from said second container (210) to said second plurality of flow modules (201, 202, 203).

9. The system of Claim 8, wherein the system comprises a controller (5001) which is configured to adjust a speed of said second pump (212) for tuning the flow rate of said second mobile phase.

10. The system of claim 8, wherein said second pump (212) is configured to provide a different dynamic range of fluid flow rate than a dynamic range of fluid flow rate provided by said first pump (112).

11. The system of Claim 10, wherein the system comprises a controller (5001) which is configured to adjust a speed of any of said first and said second pump (112, 212) to change dynamically during run-time a flow rate of fluid delivered to said LC column (12).

12. The system of Claim 11, wherein said first selector valve (300) comprises a first plurality of inlet ports (301a, 301b, 301c) each of which is in fluid communication with an outlet port (101b, 102b, 103b) of one of said first plurality of flow modules (101, 102, 103) and a first outlet port (303a) through which the first mobile phase exits said first selector valve (300).

13. The system of Claims 7 and 8, further comprising a second pressure sensor disposed between said second pump (212) and said second plurality of fluid flow modules (201, 202, 203) for measuring fluid pressure delivered to said second plurality of fluid flow modules (201, 22, 203).

14. The system of Claim 12, wherein said first selector valve (300) further comprises a second plurality of inlet ports (302a, 302b, 302c) each of which is in fluid communication with an outlet port (201b, 202b, 203b) of one of said second plurality of flow modules (201, 202, 203) to receive said second mobile phase and further comprises a second outlet port (303b) through which the second mobile phase exits the selector valve (300), optionally further comprising:
a mixing element (400) having a first inlet port (400a) for receiving said first mobile phase from said first outlet port (303a) of the first selector valve (300) and a second inlet port (400b) for receiving said second mobile phase from said outlet port (303b) of the first selector valve (300) to generate a mixed mobile phase, said mixing element having an outlet port (400b) for delivering said mixed mobile phase to said LC column (12); and/or
a third pressure sensor disposed between the outlet ports of any of said first and said second plurality of fluid flow modules (101, 102, 103, 201, 202, 203) and said mixing element (400) for measuring pressure of fluid delivered from any of said first and said second plurality of flow modules (101, 102, 103, 201, 202, 203) to said mixing element (400), optionally wherein said second pump (212) is configured to provide a dynamic range of fluid flow that is different than a dynamic range of fluid flow provided by said first pump (112).

15. The system of Claim 1, further comprising a second selector valve in fluid communication with said second plurality of pre-calibrated flow modules for selecting from among said second plurality of pre-calibrated flow modules (201, 202, 203) for selective delivery of said second mobile phase to said LC column (12),
optionally further comprising a mixing element (400) having a first inlet port (400a) for receiving the first mobile phase from the first selector valve (3000) and having a second inlet port (400b) for receiving the second mobile phase from the second selector valve,
further optionally wherein said mixing element (400) comprises an outlet port (400c) for delivering a mixed mobile phase comprising a mixture of said received first and second mobile phases to said LC column (12).

## Patentansprüche

1. System zum Anpassen einer Durchflussrate von mindestens einer mobilen Phase, die einer Flüssigchromatographie- (LC) -Säule (12) zugeführt wird, umfassend:
eine erste Vielzahl von vorkalibrierten Durchflussmodulen (101, 102, 103), die jeweils ausgebildet sind, um eine erste mobile Phase an einem Einlassanschluss (101a, 102a, 103a) davon zu empfangen und einen vorkalibrierten Bereich von Ausgabeflussraten der ersten mobilen Phase an ihrem Auslassanschluss (101b, 102b, 103b) bereitzustellen, wobei die erste Vielzahl von Durchflussmodulen (101, 102, 103) ausgebildet ist, um unterschiedliche Bereiche von Ausgabeflussraten der ersten mobilen Phase bereitzustellen, und
ein erstes Schaltventil (300) in Fluidkommunikation mit der ersten Vielzahl von vorkalibrierten Durchflussmodulen (101, 102, 103) zum Schalten aus der ersten Vielzahl von vorkalibrierten Durchflussmodulen (101, 102, 103) zur selektiven Zufuhr der ersten mobilen Phase zu der LC-Säule (12), wodurch die Durchflussrate der ersten mobilen Phase, die der LC-Säule (12) zugeführt wird, angepasst wird.

2. System nach Anspruch 1, weiter umfassend einen ersten Behälter (110) zum Speichern der ersten mobilen Phase, wobei der erste Behälter (110) in Fluidkommunikation mit der ersten Vielzahl von vorkalibrierten Durchflussmodulen (101, 102, 103) zum Zuführen der ersten mobilen Phase dorthin ist.

3. System nach Anspruch 2, weiter umfassend eine erste Pumpe (112) zum Zuführen der ersten mobilen Phase aus dem ersten Behälter (110) an die erste Vielzahl von Durchflussmodulen (101, 102, 103),
optional weiter umfassend einen ersten Drucksensor, angeordnet zwischen der ersten Pumpe (112) und der ersten Vielzahl von Fluiddurchflussmodulen (101, 102, 103) zum Messen des Fluiddrucks, der an die erste Vielzahl von Fluiddurchflussmodulen (101, 102, 103) zugeführt wird, und
optional weiter umfassend eine Steuereinheit (5001) zum Anpassen einer Drehzahl der ersten Pumpe (112) zum Abstimmen der Durchflussrate der ersten mobilen Phase, die an die erste Vielzahl der Durchflussmodule (101, 102, 103) zugeführt wird.

4. System nach einem der vorstehenden Ansprüche, wobei das erste Schaltventil (300) eine erste Vielzahl von Einlassanschlüssen (301a, 301b, 301c) umfasst, von denen jeder in Fluidkommunikation mit einem Auslassanschluss (101b, 102b, 103b) von einem der ersten Vielzahl von Durchflussmodulen (101, 102, 103) und einem ersten Auslassanschluss (303a), durch den die erste mobile Phase das erste Schaltventil (300) verlässt, ist.

5. System nach Anspruch 2, weiter umfassend eine zweite Vielzahl von vorkalibrierten Durchflussmodulen (201, 202, 203), wobei jedes ausgebildet ist, um eine zweite mobile Phase an einem Einlassanschluss (201a, 201b, 201c) davon zu empfangen und einen vorkalibrierten Bereich von Ausgabeflussraten der zweiten mobilen Phase an ihrem Auslassanschluss (202a, 202b, 202c) bereitzustellen, wobei die zweite Vielzahl von Durchflussmodulen (201, 202, 203) ausgebildet ist, um unterschiedliche Bereiche von Ausgabedurchflussraten der zweiten mobilen Phase relativ zu den Durchflussraten, die von der ersten Vielzahl von Durchflussmodulen (101, 102, 103) für die erste mobile Phase bereitgestellt werden, bereitzustellen.

6. System nach Anspruch 5, weiter umfassend einen zweiten Behälter (210) zum Speichern der zweiten mobilen Phase, wobei der zweite Behälter (210) in Fluidkommunikation mit der zweiten Vielzahl von vorkalibrierten Durchflussmodulen (201, 202, 203) zum Zuführen der zweiten mobilen Phase dorthin ist.

7. System nach Anspruch 6, wobei das erste Schaltventil (300) mit der zweiten Vielzahl von vorkalibrierten Durchflussmodulen (201, 202, 203) fluidisch gekoppelt ist, zum Auswählen aus der zweiten Vielzahl von Durchflussmodulen (201, 202, 203) zum Zuführen der zweiten mobilen Phase zu der LC-Säule (12), wodurch die Flussrate der zweiten mobilen Phase, die an die LC-Säule (12) zugeführt wird, angepasst wird.

8. System nach Anspruch 6, weiter umfassend eine zweite Pumpe (212) zum Zuführen der zweiten mobilen Phase aus dem zweiten Behälter (210) an die zweite Vielzahl von Durchflussmodulen (201, 202, 203).

9. System nach Anspruch 8, wobei das System eine Steuereinheit (5001) umfasst, die ausgebildet ist, um eine Drehzahl der zweiten Pumpe (212) anzupassen zum Abstimmen der Durchflussrate der zweiten mobilen Phase.

10. System nach Anspruch 8, wobei die zweite Pumpe (212) ausgebildet ist, um einen anderen dynamischen Bereich der Fluiddurchflussrate bereitzustellen als einen dynamischen Bereich der Fluiddurchflussrate, der von der ersten Pumpe (112) bereitgestellt wird.

11. System nach Anspruch 10, wobei das System eine Steuereinheit (5001) umfasst, die ausgebildet ist, um eine Drehzahl der ersten oder der zweiten Pumpe (112, 212) zum dynamischen Ändern, während der Laufzeit, einer Durchflussrate des Fluids, das an die LC-Säule (12) zugeführt wird, anzupassen.

12. System nach Anspruch 11, wobei das erste Schaltventil (300) eine erste Vielzahl von Einlassanschlüssen (301a, 301b, 301c) umfasst, von denen jeder in Fluidkommunikation mit einem Auslassanschluss (101b, 102b, 103b) eines aus der ersten Vielzahl von Durchflussmodulen (101, 102, 103) und mit einem ersten Auslassanschluss (303a) ist, durch den die erste mobile Phase das erste Schaltventil (300) verlässt.

13. System nach den Ansprüchen 7 und 8, weiter umfassend einen zweiten Drucksensor, der zwischen der zweiten Pumpe (212) und der zweiten Vielzahl von FluidDurchflussmodulen (201, 202, 203) zum Messen eines Fluiddrucks, der an die zweite Vielzahl von FluidDurchflussmodulen (201, 22, 203) zugeführt wird, angeordnet ist.

14. System nach Anspruch 12, wobei das erste Schaltventil (300) weiter eine zweite Vielzahl von Einlassanschlüssen (302a, 302b, 302c) umfasst, von denen jeder in Fluidkommunikation mit einem Auslassanschluss (201b, 202b, 203b) eines der zweiten Vielzahl von Durchflussmodulen (201, 202, 203) zum Empfangen der zweiten mobilen Phase ist, und weiter einen zweiten Auslassanschluss (303b) umfasst, durch den die zweite mobile Phase das Schaltventil (300) verlässt, optional weiter umfassend:
ein Mischelement (400), aufweisend einen ersten Einlassanschluss (400a) zum Empfangen der ersten mobilen Phase aus dem ersten Auslassanschluss (303a) des ersten Schaltventils (300) und einen zweiten Einlassanschluss (400b) zum Empfangen der zweiten mobilen Phase aus dem Auslassanschluss (303b) des ersten Schaltventils (300) zum Erzeugen einer gemischten mobilen Phase, wobei das Mischelement einen Auslassanschluss (400b) zum Zuführen der gemischten mobilen Phase zu der LC-Säule (12) aufweist; und/oder
einen dritten Drucksensor, der zwischen den Auslassanschlüssen einer beliebigen der ersten und zweiten Vielzahl von Fluiddurchflussmodulen (101, 102, 103, 201, 202, 203) und dem Mischelement (400) angeordnet ist, um den Druck des Fluids, das von einer beliebigen der ersten und zweiten Vielzahl von Durchflussmodulen (101, 102, 103, 201, 202, 203) an das Mischelement (400) zugeführt wird, zu messen, wobei optional die zweite Pumpe (212) ausgebildet ist, um einen dynamischen Bereich des Fluidflusses bereitzustellen, der sich von dem von der ersten Pumpe (112) bereitgestellten dynamischen Bereich des Fluidflusses unterscheidet.

15. System nach Anspruch 1, weiter umfassend ein zweites Schaltventil in Fluidkommunikation mit der zweiten Vielzahl von vorkalibrierten Durchflussmodulen zum Schalten aus der zweiten Vielzahl von vorkalibrierten Durchflussmodulen (201, 202, 203) zum selektiven Zuführen der zweiten mobilen Phase an die LC-Säule (12),
optional weiter umfassend ein Mischelement (400), aufweisend einen ersten Einlassanschluss (400a) zum Empfangen der ersten mobilen Phase von dem ersten Schaltventil (3000) und aufweisend einen zweiten Einlassanschluss (400b) zum Empfangen der zweiten mobilen Phase von dem zweiten Schaltventil,
wobei das Mischelement (400) weiter optional einen Auslassanschluss (400c) zum Zuführen einer gemischten mobilen Phase umfasst, umfassend eine Mischung aus der empfangenen ersten und zweiten mobilen Phase an die LC-Säule (12).

## Revendications

1. Système pour ajuster le débit d'au moins une phase mobile délivrée à une colonne de chromatographie liquide (CL) (12), comprenant :
une première pluralité de modules de débit pré-étalonnés (101, 102, 103), chacun étant configuré pour recevoir une première phase mobile à un orifice d'entrée (101a, 102a, 103a) de celui-ci et pour fournir une plage pré-étalonnée de débits de sortie de ladite première phase mobile à son orifice de sortie (101b, 102b, 103b), dans lequel ladite première pluralité de modules de débit (101, 102, 103) sont configurés pour fournir différentes plages de débits de sortie de ladite première phase mobile, et
une première valve de sélection (300) en communication fluidique avec ladite première pluralité de modules de débit pré-étalonnés (101, 102, 103) à des fins de sélection parmi ladite première pluralité de modules de débit pré-étalonnés (101, 102, 103) en vue de la délivrance sélective de ladite première phase mobile à ladite colonne de CL (12), pour ainsi ajuster le débit de la première phase mobile délivrée à ladite colonne de CL (12).

2. Système selon la revendication 1, comprenant en outre un premier récipient (110) pour stocker ladite première phase mobile, ledit premier récipient (110) étant en communication fluidique avec ladite première pluralité de modules de débit pré-étalonnés (101, 102, 103) pour délivrer ladite première phase mobile à ceux-ci.

3. Système selon la revendication 2, comprenant en outre une première pompe (112) pour délivrer ladite première phase mobile depuis ledit premier récipient (110) à ladite première pluralité de modules de débit (101, 102, 103),
comprenant en outre facultativement un premier capteur de pression disposé entre ladite première pompe (112) et ladite première pluralité de modules de débit de fluide (101, 102, 103) pour mesurer la pression de fluide délivrée à ladite première pluralité de modules de débit de fluide (101, 102, 103), et
comprenant en outre facultativement un dispositif de commande (5001) pour ajuster une vitesse de ladite première pompe (112) afin de régler le débit de ladite première phase mobile délivrée à ladite première pluralité de modules de débit (101, 102, 103).

4. Système selon l'une quelconque des revendications précédentes, dans lequel ladite première valve de sélection (300) comprend une première pluralité d'orifices d'entrée (301a, 301b, 301c), chacun de ceux-ci étant en communication fluidique avec un orifice de sortie (101b, 102b, 103b) de l'un des modules de ladite première pluralité de modules de débit (101, 102, 103), et un premier orifice de sortie (303a) à travers lequel la première phase mobile sort de la première valve de sélection (300).

5. Système selon la revendication 2, comprenant en outre une deuxième pluralité de modules de débit pré-étalonnés (201, 202, 203), chacun étant configuré pour recevoir une deuxième phase mobile à un orifice d'entrée (201a, 201b, 201c) de celui-ci et pour fournir une plage pré-étalonnée de débits de sortie de ladite deuxième phase mobile à son orifice de sortie (202a, 202b, 202c), dans lequel ladite deuxième pluralité de modules de débit (201, 202, 203) sont configurés pour fournir différentes plages de débits de sortie de ladite deuxième phase mobile par rapport aux débits fournis par ladite première pluralité de modules de débit (101, 102, 103) pour la première phase mobile.

6. Système selon la revendication 5, comprenant en outre un deuxième récipient (210) pour stocker ladite deuxième phase mobile, ledit deuxième récipient (210) étant en communication fluidique avec ladite deuxième pluralité de modules de débit pré-étalonnés (201, 202, 203) pour délivrer ladite deuxième phase mobile à ceux-ci.

7. Système selon la revendication 6, dans lequel ladite première valve de sélection (300) est couplée de manière fluidique à ladite deuxième pluralité de modules de débit pré-étalonnés (201, 202, 203) à des fins de sélection parmi ladite deuxième pluralité de modules de débit (201, 202, 203) en vue de la délivrance de la deuxième phase mobile à ladite colonne de CL (12), pour ainsi ajuster le débit de la deuxième phase mobile délivrée à ladite colonne de CL (12).

8. Système selon la revendication 6, comprenant en outre une deuxième pompe (212) pour délivrer ladite deuxième phase mobile depuis ledit deuxième récipient (210) à ladite deuxième pluralité de modules de débit (201, 202, 203).

9. Système selon la revendication 8, dans lequel le système comprend un dispositif de commande (5001) qui est configuré pour ajuster une vitesse de ladite deuxième pompe (212) afin de régler le débit de ladite deuxième phase mobile.

10. Système selon la revendication 8, dans lequel ladite deuxième pompe (212) est configurée pour fournir une plage dynamique de débit de fluide différente d'une plage dynamique de débit de fluide fournie par ladite première pompe (112).

11. Système selon la revendication 10, dans lequel le système comprend un dispositif de commande (5001) qui est configuré pour ajuster une vitesse de l'une quelconque de ladite première et de ladite deuxième pompe (112, 212) pour modifier de manière dynamique pendant le temps de fonctionnement un débit de fluide délivré à ladite colonne de CL (12).

12. Système selon la revendication 11, dans lequel ladite première valve de sélection (300) comprend une première pluralité d'orifices d'entrée (301a, 301b, 301c), chacun de ceux-ci étant en communication fluidique avec un orifice de sortie (101b, 102b, 103b) de l'un des modules de ladite première pluralité de modules de débit (101, 102, 103), et un premier orifice de sortie (303a) à travers lequel la première phase mobile sort de ladite première valve de sélection (300).

13. Système selon la revendication 7 et la revendication 8, comprenant en outre un deuxième capteur de pression disposé entre ladite deuxième pompe (212) et ladite deuxième pluralité de modules de débit de fluide (201, 202, 203) pour mesurer la pression de fluide délivrée à ladite deuxième pluralité de modules de débit de fluide (201, 22, 203).

14. Système selon la revendication 12, dans lequel ladite première valve de sélection (300) comprend en outre une deuxième pluralité d'orifices d'entrée (302a, 302b, 302c), chacun de ceux-ci étant en communication fluidique avec un orifice de sortie (201b, 202b, 203b) de l'un des modules de ladite deuxième pluralité de modules de débit (201, 202, 203) pour recevoir ladite deuxième phase mobile, et comprend en outre un deuxième orifice de sortie (303b) à travers lequel la deuxième phase mobile sort de la valve de sélection (300), facultativement comprenant en outre :
un élément de mélange (400) présentant un premier orifice d'entrée (400a) pour recevoir ladite première phase mobile depuis ledit premier orifice de sortie (303a) de la première valve de sélection (300) et un deuxième orifice d'entrée (400b) pour recevoir ladite deuxième phase mobile depuis ledit orifice de sortie (303b) de la première valve de sélection (300) afin de générer une phase mobile mélangée, ledit élément de mélange présentant un orifice de sortie (400b) pour délivrer ladite phase mobile mélangée à ladite colonne de CL (12) ; et/ou
un troisième capteur de pression disposé entre les orifices de sortie de l'une quelconque de ladite première et de ladite deuxième pluralité de modules de débit de fluide (101, 102, 103, 201, 202, 203) et ledit élément de mélange (400) pour mesurer la pression du fluide délivré depuis l'une quelconque de ladite première et de ladite deuxième pluralité de modules de débit (101, 102, 103, 201, 202, 203) audit élément de mélange (400), facultativement dans lequel ladite deuxième pompe (212) est configurée pour fournir une plage dynamique de débit de fluide qui est différente d'une plage dynamique de débit de fluide fournie par ladite première pompe (112).

15. Système selon la revendication 1, comprenant en outre une deuxième valve de sélection en communication fluidique avec ladite deuxième pluralité de modules de débit pré-étalonnés à des fins de sélection parmi ladite deuxième pluralité de modules de débit pré-étalonnés (201, 202, 203) en vue de la délivrance sélective de ladite deuxième phase mobile à ladite colonne de CL (12),
comprenant en outre facultativement un élément de mélange (400) présentant un premier orifice d'entrée (400a) pour recevoir la première phase mobile depuis la première valve de sélection (3000) et présentant un deuxième orifice d'entrée (400b) pour recevoir la deuxième phase mobile depuis la deuxième valve de sélection,
dans lequel, en outre facultativement, ledit élément de mélange (400) comprend un orifice de sortie (400c) pour délivrer une phase mobile mélangée comprenant un mélange desdites première et deuxième phases mobiles reçues à ladite colonne de CL (12).
